# EUROPÄISCHE PATENTSCHRIFT

(11) **EP 0 516 971 B1**
(45) Veröffentlichungstag und Bekanntmachung des Hinweises auf die Patenterteilung: **05.07.1995**
(21) Anmeldenummer: 92107221.1
(22) Anmeldetag: 28.04.1992
(51) Int. Cl.: B61B 10/02, B65G 19/02

(54) **Hängefördereinrichtung**
Conveyor hanger assembly
Dispositif suspendu de convoyage

(30) Priorität: 03.06.1991 DE 9106792 U
(43) Veröffentlichungstag der Anmeldung: 09.12.1992
(73) Patentinhaber: RSL LOGISTIK GMBH & CO, D-86899 Landsberg (DE)
(72) Erfinder: Enderlein, Robby, W-8910 Landsberg/Lech (DE); Kunze, Walter, W-8900 Augsburg (DE)
(74) Vertreter: Grünecker, Kinkeldey, Stockmair & Schwanhäusser Anwaltssozietät

(56) Entgegenhaltungen:
- DE-A- 4 017 821
- FR-A- 1 395 928
- US-A- 4 250 988

## Beschreibung

Die Erfindung bezieht sich auf eine Hängefördereinrichtung der im Oberbegriff von Anspruch 1 erläuterten Art.

Eine derartige Hängefördereinrichtung ist aus der DE-AS 30 42 689 bekannt. Bei der bekannten Hängefördereinrichtung besteht der Mitnehmer aus einer Vielzahl von Hebeln, Gelenkstiften und Federn, die zum Befestigen des Mitnehmers an der Lasche einer Rollenkette bestimmt sind und eine seitlich drehbare Lagerung beim Kurvenbetrieb sicherstellen sollen. Darüberhinaus muß jedoch durch Haltestützen sichergestellt werden, daß die seitliche Drehung beim geradlinigen Fördern nicht auftritt. Schließlich müssen Vorkehrungen getroffen werden, die Mitnehmerfinger bei Bedarf aus dem Förderweg der Fördermittel herauszuziehen. Die konstruktive Gestaltung der bekannten Hängefördereinrichtung ist jedoch äußerst kompliziert und erfordert, insbesondere zum Zurückziehen der Mitnehmerfinger, Bedienungspersonal.

Die US-A-4 250 988 beschreibt eine Fördereinrichtung zum Fördern von Büchern in einer Gleitrinne. Die Fördervorrichtung enthält eine umlaufende Kette, die mit einer Vielzahl von Mitnehmern versehen ist. Jeder Mitnehmer enthält einen elastisch abbiegbaren Mitnehmerfinger, der sich bis in den Bereich der Gleitschiene erstreckt. Der Mitnehmerfinger ist mit Hilfe eines Klemmstückes fest mit einem Halteteil verschraubt und weist zwischen dem Halteteil und seinem freien Ende die gleiche Elastizität auf. Das Halteteil enthält eine gebogene Anschlagfläche für den Mitnehmerfinger, die die Elastizität bzw. den Auslenkwinkel des Mitnehmerfingers begrenzt. Bei jeder Betriebsstörung muß sich somit immer der gesamte Mitnehmerfinger biegen. Örtliche Spannungsspitzen, beispielsweise beim Anfahren, übertragen sich voll auf die geförderten Bücher.

Der Erfindung liegt somit die Aufgabe zugrunde, eine konstruktiv einfache und selbsttätig arbeitende Hängefördereinrichtung bereitzustellen.

Die Aufgabe wird durch die kennzeichnenden Merkmale des Anspruches 1 gelöst.

Durch die Ausgestaltung des Mitnehmers als Kunststoffteil mit einem in sich elastischen Mitnehmerfinger, der über einen elastischen Bereich verfügt, kann, bei Abstimmung des Querschnittes bzw. der Elastizität des Mitnehmerfingers auf die zum Transportieren der Fördermittel erforderlichen Kraft, sowohl eine gute Kurvengängigkeit als auch ein ruckfreies Anfahren erzielt werden. Kunststoffteile sind einfach herstellbar und können bei Verschleiß problemlos ausgetauscht werden.

Weiterhin entlastet der Bereich erhöhter Elastizität auch die Befestigungsstelle des Mitnehmerfingers am Halteteil von den beim Antrieb der Fördermittel auftretenden, örtlichen Spannungsspitzen.

Anspruch 2 beschreibt eine besonders einfache Möglichkeit, einen Bereich erhöhter Elastizität zu schaffen.

Die Ausbildung des Mitnehmers als Streifen gemäß Anspruch 3 verbindet eine gute, innere Elastizität des Mitnehmerfingers mit einer ausreichenden mechanischen Festigkeit.

Besonders einfach ist der erfindungsgemäße Mitnehmer herzustellen, wenn der Mitnehmerfinger gemäß Anspruch 4 einstückig am Halteteil angeformt ist.

Die lösbare Befestigung des Mitnehmers an einer Lasche des Förderelementes gemäß Anspruch 5 erleichtert den Austausch verschlissener Mitnehmer weiter.

Die Ausgestaltung des Halteteiles nach den Ansprüchen 6 und 7 stellt eine besonders einfach herzustellende und leicht aufzubringende bzw. zu lösende Verbindung zwischen dem Mitnehmer und dem Förderelement dar.

Zweckmäßigerweise wird als Förderelement gemäß Anspruch 8 eine handelsübliche, mit Laschen versehene Rollenkette verwendet.
Anspruch 9 beschreibt eine besonders bevorzugte Anordnung des Förderelementes.

Die Ansprüche 10 und 11 beschreiben einen für die Erfindung zu verwendenden Mitnehmer.

Ein Ausführungsbeispiel der Erfindung wird nachfolgend anhand der Zeichnungen naher erläutert. Es zeigen:
- Figur 1: einen Teil einer Hängefördereinrichtung in schematischer Darstellung,
- Figur 2: die Draufsicht auf den Antrieb nach Figur 1,
- Figur 3: den Schnitt III-III durch den Mitnehmer aus Figur 2, und
- Figur 4: eine Draufsicht auf den Mitnehmer von unten.

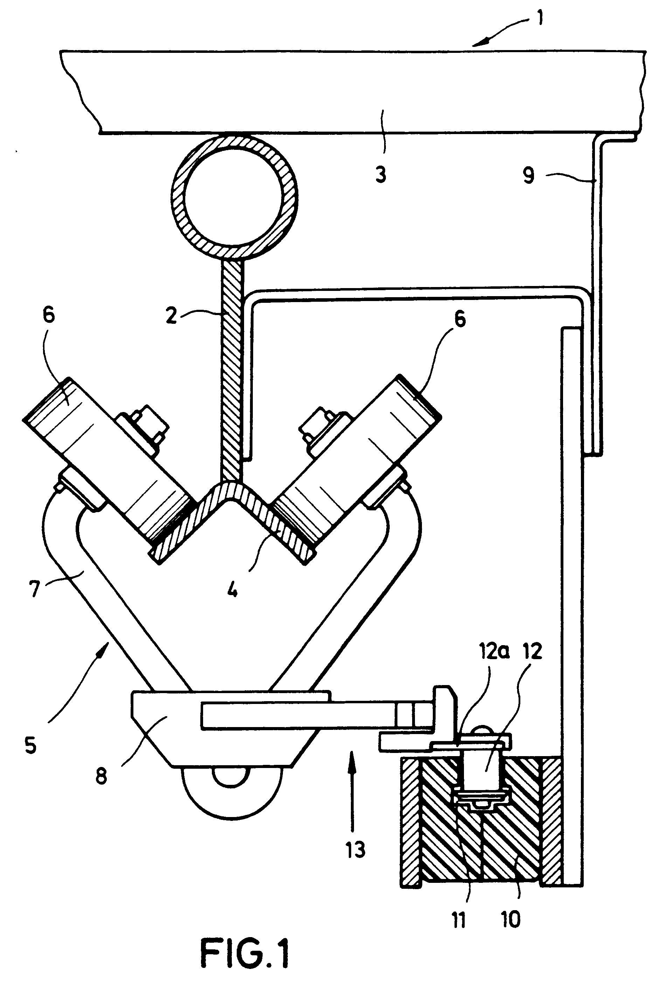

Aus Figur 1 ist in schematischer Darstellung ein Teil einer Hängefördereinrichtung 1 mit einer Schiene 2 ersichtlich, die sich von einem Träger 3 nach unten erstreckt. Die Schiene 2 meist ein dachförmiges Laufflächenprofil 4 auf, auf dessen Oberseite sich ein Fördermittel 5 Alt seinen Laufrollen 6 derart abstützt, daß das Fördermittel 5 in Richtung senkrecht zur Zeichnungsebene in Figur 1 abrollen kann. Die Laufrollen 6 sind mit einem U- bzw. V-förmigen Bügel 7 miteinander verbunden, der durch einen Quersteg 8 stabilisiert wird. Am Bügel 7 können direkt bzw. indirekt über weitere Bauteile die zu fördernden Gegenstände angehängt werden.

Am Träger 3 ist weiterhin über ein Gestänge 9 eine Kunststoffschiene 10 abgehängt, die an der zum Träger 3 weisenden Oberseite eine nach oben offene Ausnehmung 11 aufweist. In der Ausnehmung 11 und mit seinem oberen Teil aus ihr herausragend läuft ein langgestrecktes, flexibles Förderelement in Form einer handelsüblichen, mit Laschen 12a versehenen Rollenkette 12. Die Kunststoffschiene 10 befindet sich schräg seitlich unterhalb des Laufflächenprofils 4 und ist derart angeordnet, daß sich die Rollenkette 12 zumindest im Förderbereich parallel zum Laufflächenprofil 4 bewegt, wenn sie durch einen nicht gezeichneten Antrieb, beispielsweise ein Zahnrad mit Motorantrieb, angetrieben wird. An der Rollenkette 12 ist ein Mitnehmer 13 derart befestigt, daß er von der Seite und waagerecht in den Förderweg des Fördermittels 5 auf dem Laufflächenprofil 4 ragt. Zweckmäßigerweise ist die Lage der Kunststoffschiene 10 derart auf das Fördermittel 5 abgestimmt, daß der Mitnehmer 13 mit dem Quersteg 8 in Eingriff tritt, wenn das Fördermittel 5 auf dem Laufflächenprofil 4 abrollt.

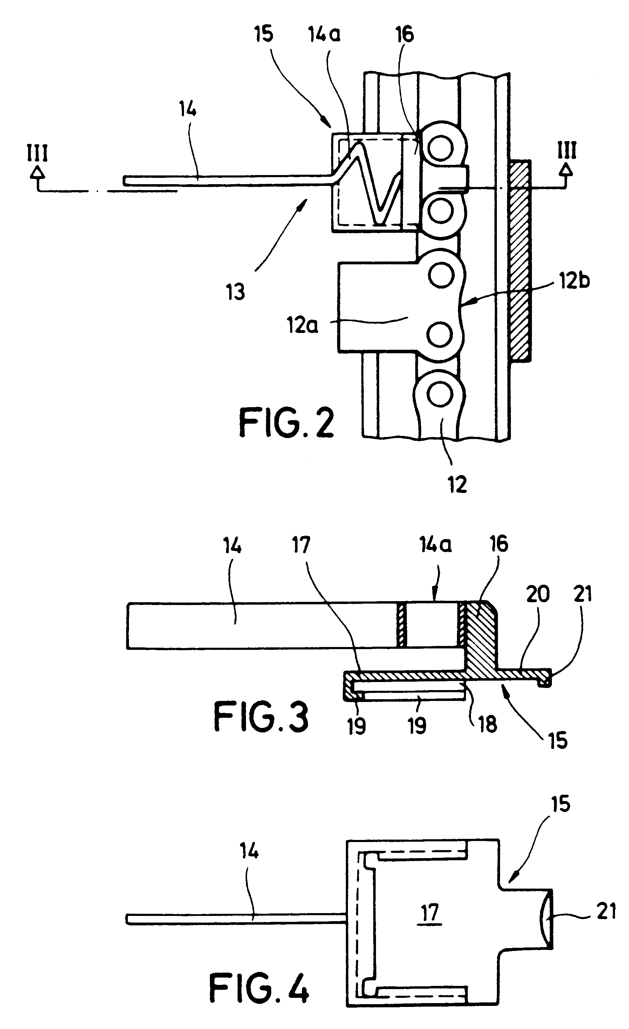

Wie die Figuren 2 bis 4 zeigen, weist der Mitnehmer 13 einen Mitnehmerfinger 14 und ein Halteteil 15 auf, die einstückig aus Kunststoff gespritzt sind. Der Mitnehmerfinger 14 ist als horizontaler Steg mit rechteckigem Querschnitt ausgebildet, dessen kleinste Anmessung in Förderrichtung weist. Der Mitnehmerfinger 14 ist so schmal, daß er in sich elastisch nachgiebig in Förderrichtung, d.h. senkrecht zur Zeichnungsebene in Figur 1, bewegbar ist. Zur weiteren Erhöhung seiner Elastizität ist der Mitnehmerfinger 14 in einem Bereich 14a in Förderrichtung zick-zack-förmig ausgelenkt. Jenseits des Bereiches 14a ist der Mitnehmerfinger 14 über seine Querschnittsfläche mit einem senkrechten Haltesteg 16 des Halteteiles 15 verbunden (siehe Figur 3). Die Elastizität des Mitnehmers kann auf einfache Weise durch Querschnitts- oder Abmessungsänderung des Fingers bzw. Änderungen im Bereich 14a auf gewünschte Weise verändert und an unterschiedliche Transportaufgaben angepaßt werden.

Der Haltesteg 16 ist wiederum einstückig mit der Oberseite einer rechteckigen Halteplatte 17 des Halteteiles 15 verbunden, die sich mit Abstand unterhalb des Mitnehmerfingers 14 vom Haltesteg 16 in Richtung auf das freie Ende des Mitnehmerfingers 14 erstreckt. An der dem Haltesteg 16 abgewandten Seite der Halteplatte 17 sind an drei ihrer Seiten Rastnuten 18 bildende Raststege 19 angeformt. In Verlängerung der Halteplatte 17 erstreckt sich an der dem Mitnehmerfinger 14 abgewandten Seite des Haltesteges 16 ein federnder Steg 20 mit einem nach unten weisenden, hakenartigen Vorsprung 21, der als Gegenhaltehaken wirkt.

Wie insbesondere in Figur 2 gezeigt, ist die Rollenkette 12 mit Laschen 12a versehen, die sich an der in Figur 1 oberen Seite der Rollenkette 12 befinden und als einseitige Vorsprünge einstückig mit den Deckplatten jeder oder ausgewählter Kettenglieder ausgebildet sind. Die Rollenkette 12 ist derart in der Kunststoffschiene 10 aufgenommen, daß sich die Laschen 12a in Richtung auf das Fördermittel 5 erstrecken. Die Abmessungen des Halteteiles 15 sind derart auf die Abmessungen der Laschen 12a abgestimmt, daß der Mitnehmer 13 bei leicht aufwärts gebogenem Haken 21 von vorn derart auf die Lasche 12a aufgeschoben werden kann, daß diese in den Rastnuten 18 aufgenommen wird. Anschließend schnappt der Hakenvorsprung 21 in eine Vertiefung 12b ein, die sich an der der Lasche 12a abgewandten Seite der Rollenkette 12 befindet und wird dort durch die formschlüssige Anpassung des Hakens 21 an die Vertiefung 12b gehalten. Je nach Förderaufgabe können alle oder nur ausgewählte Laschen 12 mit Mitnehmern 13 bestückt werden.

Zum Transportieren der Fördermittel 5 wird der Antrieb für die Kette 12 in Gang gesetzt. Im Verlauf der Bewegung der Rollenkette 12 gelangt der Mitnehmerfinger 14 in Eingriff mit dem Quersteg eines der Fördermittel 5 und nimmt dieses in seiner Bewegung mit. Die Elastizität des Mitnehmerfingers 14, insbesondere in seinem Bereich 14a, verhindert ein ruckweises Anschieben des Fördermittels. Darüberhinaus kann bei einem Stop des Fördermittels 5 bei weiterlaufender Kette 12 der Mitnahmefinger soweit ausgelenkt werden, daß er außer Eingriff mit dem Fördermittel 5 gelangt, der Antrieb somit gelöst wird. Da beim Auslenken der Mitnehmerfinger im wesentlichen nur Linienberührung hat, ist auch die Reibungskraft gering.

In Abwandlung des beschriebenen Ausführungsbeispiels kann der Mitnehmerfinger an anderen Stellen des Fördermittels angreifen. Es kann für jedes Fördermittel eines gekoppelten Fördermittelzugs ein eigener Mitnehmer vorgesehen werden. Es ist jedoch auch möglich, Mitnehmer nur an ausgewählten Stellen des Förderzuges angreifen zu lassen. Obwohl eine einstückige Ausbildung des Mitnehmers bevorzugt ist, kann beispielsweise der Mitnehmerfinger in eine Schwalbenschwanznut am Haltesteg eingeschoben oder sonstwie befestigt werden. Anstelle der Rollenkette kann jedes andere flexible, langgestreckte Förderelement, wie beispielsweise eine Gliederkette, ein Seil, ein Riemen oder dgl. verwendet werden, die zweckmäßigerweise mit Laschen oder anderen Befestigungselementen zum Befestigen des Mitnehmers versehen sein sollte. Der Mitnehmer kann jedoch auch durch Klammern od.dgl. auf dem Förderelement befestigt werden.

## Patentansprüche

1. Hängefördereinrichtung, mit einem Antrieb und einem entlang eines durch eine Schiene vorgegebenen Förderweges verfahrbaren Fördermittel, wobei der Antrieb ein langgestrecktes, nachgiebiges Förderelement aufweist, auf dem wenigstens ein in den Förderweg ragender, die Fördermittel bei einer antreibenden Bewegung des Förderelements schiebender Mitnehmer angeordnet ist, **dadurch gekennzeichnet**, daß der Mitnehmer (13) ein Kunststoffteil mit einem im wesentlichen starr mit dem Förderelement (12) zu verbindenden Halteteil (15) und einem Mitnehmerfinger (14) ist, der in sich elastisch nachgiebig parallel zum Förderweg bewegbar und über einen Bereich (14a) erhöhter Elastizität mit dem Halteteil (15) verbunden ist.

2. Hängefördereinrichtung nach Anspruch 1, **dadurch gekennzeichnet**, daß der Bereich (14a) erhöhter Elastizität durch ein in Förderrichtung zick-zack-förmiges Auslenken des Mitnehmerfingers (14) gebildet ist.

3. Hängefördereinrichtung nach Anspruch 1 oder 2, **dadurch gekennzeichnet**, daß der Mitnehmerfinger (14) als Streifen mit rechteckigem Querschnitt ausgebildet und mit seiner kleinsten Abmessung in Förderrichtung ausgerichtet ist.

4. Hängefördereinrichtung nach einem der Ansprüche 1 bis 3**, dadurch gekennzeichnet**, daß der Mitnehmerfinger (14) am Halteteil (15) einstückig angeformt ist.

5. Hängefördereinrichtung nach einem der Ansprüche 1 bis 4, **dadurch gekennzeichnet**, daß das Förderelement (12) mit einer Lasche (12a) versehen und das Halteteil (15) lösbar an der Lasche (12a) zu befestigen ist.

6. Hängefördereinrichtung nach Anspruch 5, **dadurch gekennzeichnet**, daß das Halteteil (15) mit der Lasche (12a) verrastbar ist.

7. Hängefördereinrichtung nach Anspruch 5 oder 6, **dadurch gekennzeichnet**, daß das Halteteil (15) eine Aufnahmenut (18) für die Lasche (12a) und einen Gegenhaltehaken (20, 21) aufweist.

8. Hängefördereinrichtung nach einem der Ansprüche 1 bis 7, **dadurch gekennzeichnet**, daß das Förderelement (12) eine mit Laschen (12a) versehene Rollenkette ist.

9. Hängefördereinrichtung nach einem der Ansprüche 1 bis 8, **dadurch gekennzeichnet**, daß das Förderelement (12) seitlich unterhalb der Schiene (2, 4) derart angeordnet ist, daß der Mitnehmerfinger (14) im wesentlichen waagerecht in den Förderweg ragt.

10. Mitnehmer für eine Hängefördereinrichtung nach einem der Ansprüche 1 bis 9, **gekennzeichnet durch** seine Ausbildung als Kunststoffteil mit einem Halteteil (15) und einem einstückig mit dem Halteteil (15) verbundenen, in sich federnden Mitnehmerfinger (14), der über einen zick-zack-förmig gefalteten Bereich (14a) erhöhter Elastizität mit dem Halteteil (15) verbunden ist.

11. Mitnehmer nach Anspruch 10, **dadurch gekennzeichnet**, daß das Halteteil (15) eine Aufnahmenut (18) für eine Lasche (12a) des Förderelementes (12) und einen federnd am Förderelement (12) einrastbaren Gegenhaltehaken (20, 21) aufweist.

## Claims

1. Suspended conveyor mechanism with a drive and conveying means propellable along a conveyor path determined by a rail, the said drive having an extended, flexible conveyor element on which at least one pusher projecting into the conveyor path and pushing the conveying means upon being driven forwards by the conveyor element is arranged, characterized in that the pusher (13) is a plastic part with an attachment piece (15) for essentially rigid connection to the conveyor element (12) and with a pushing finger (14) which is capable of moving parallel with the conveyor path in an inherently elastic manner and is connected to the attachment piece (15) by a region (14a) of increased elasticity.

2. Suspended conveyor mechanism according to Claim 1, characterized in that the region (14a) of increased elasticity is constituted by a zigzag kinking of the pushing finger (14) in the conveying direction.

3. Suspended conveyor mechanism according to Claim 1 or 2, characterized in that the pushing finger (14) is in the form of a strip with a rectangular cross-section, with its smallest dimension aligned with the conveying direction.

4. Suspended conveyor mechanism according to any one of Claims 1 to 3, characterized in that the pushing finger (14) is integrally formed on the attachment piece (15).

5. Suspended conveyor mechanism according to any one of Claims 1 to 4, characterized in that the conveyor element (12) is provided with a tongue (12a) and the attachment piece (15) is releasably attached to the tongue (12a).

6. Suspended conveyor mechanism according to Claim 5, characterized in that the attachment piece (15) can be snaplocked to the tongue (12a).

7. Suspended conveyor mechanism according to Claim 5 or 6, characterized in that the attachment piece (15) has a retaining slot (18) for the tongue (12a), and a rear catch (20, 21).

8. Suspended conveyor mechanism according to any one of Claims 1 to 7, characterized in that the conveyor element (12) is a roller chain provided with tongues (12a).

9. Suspended conveyor mechanism according to any one of Claims 1 to 8, characterized in that the conveyor element (12) is located to one side of and below the rail (2, 4) so that the pushing finger (14) projects essentially horizontally into the conveyor path.

10. Pusher for a suspended conveyor mechanism according to any one of Claims 1 to 9, characterized by its being formed as a plastic part with an attachment piece (15) and with an inherently elastic pushing finger (14) integrally joined to the attachment piece (15) and connected to the attachment piece (15) by a zigzag region (14a) of increased elasticity.

11. Pusher according to Claim 10, characterized in that the attachment piece (15) has a retaining slot (18) for a tongue (12a) on the conveyor element (12) and a rear catch (20, 21) which can be snapped over the conveyor element (12) in a springy fashion.

## Revendications

1. Transporteur suspendu comportant un dispositif moteur et un moyen de transport mobile le long d'un chemin de transport formé par un rail, le dispositif moteur présentant un élément transporteur souple allongé sur lequel est placé au moins un entraîneur entrant dans le chemin de transport et poussant les moyens de transport lors d'un mouvement d' entraînement de l'élément transporteur, caractérisé par le fait que l'entraîneur (13) est une pièce en plastique ayant une partie support (15) se joignant de manière pratiquement rigide à l'élément transporteur (12) et un doigt entraîneur (14) qui est mobile en soi élastiquement parallèlement au chemin de transport et joint à la partie support (15) par une zone (14a) de plus grande élasticité.

2. Transporteur suspendu selon la revendication 1, caractérisé par le fait que la zone (14a) de plus grande élasticité est formée par une déviation en zigzag dans la direction de transport du doigt entraîneur (14).

3. Transporteur suspendu selon l'une des revendications 1 et 2, caractérisé par le fait que le doigt entraîneur (14) est formé d'une bande de section rectangulaire et sa plus petite dimension est orientée dans la direction de transport.

4. Transporteur suspendu selon l'une des revendications 1 à 3, caractérisé par le fait que le doigt entraîneur (14) fait corps avec la partie support (15).

5. Transporteur suspendu selon l'une des revendications 1 à 4, caractérisé par le fait que l'élément transporteur (12) est pourvu d'une patte (12a) et la partie support (15) se fixe de manière démontable à cette patte (12a).

6. Transporteur suspendu selon la revendication 5, caractérisé par le fait que la partie support (15) s'encliquette sur la patte (12a).

7. Transporteur suspendu selon l'une des revendications 5 et 6, caractérisé par le fait que la partie support (15) présente une rainure (18) destinée à recevoir la patte (12a) et un crochet de maintien (20, 21).

8. Transporteur suspendu selon l'une des revendications 1 à 7, caractérisé par le fait que l'élément transporteur (12) est une chaîne à rouleaux pourvue de pattes (12a).

9. Transporteur suspendu selon l'une des revendications 1 à 8, caractérisé par le fait que l'élément transporteur (12) est placé latéralement au-dessous du rail (2, 4) de façon telle que le doigt entraîneur (14) entre sensiblement horizontalement dans le chemin de transport.

10. Entraîneur pour un transporteur suspendu selon l'une des revendications 1 à 9, caractérisé par le fait qu'il est constitué d'une pièce en plastique ayant une partie support (15) et un doigt entraîneur élastique (14) faisant corps avec cette partie support (15) et se joignant à celle-ci par une zone pliée en zigzag (14a) de plus grande élasticité.

11. Entraîneur selon la revendication 10, caractérisé par le fait que la partie support (15) présente une rainure (18) destinée à recevoir une patte (12a) de l'élément transporteur (12) et un crochet de maintien (20, 21) s'encliquetant élastiquement sur l'élément transporteur (12).
